# EUROPÄISCHE PATENTSCHRIFT

(11) **EP 0 938 648 B1**
(45) Veröffentlichungstag und Bekanntmachung des Hinweises auf die Patenterteilung: **09.12.2009**
(21) Anmeldenummer: 98943658.9
(22) Anmeldetag: 09.07.1998
(51) Int. Cl.: G01F 1/684

(54) **VORRICHTUNG ZUR MESSUNG DER MASSE EINES STRÖMENDEN MEDIUMS**
DEVICE FOR MEASURING THE MASS OF A FLOWING MEDIUM
DISPOSITIF POUR MESURER LA MASSE D'UN FLUIDE EN ECOULEMENT

(30) Priorität: 18.09.1997 DE 19741031
(43) Veröffentlichungstag der Anmeldung: 01.09.1999
(73) Patentinhaber: ROBERT BOSCH GMBH, 70442 Stuttgart (DE)
(72) Erfinder: MÜLLER, Wolfgang, D-71277 Rutesheim (DE); REYMANN, Klaus, D-70839 Gerlingen (DE); KONZELMANN, Uwe, D-71679 Asperg (DE)
(86) Internationale Anmeldenummer: PCT/DE1998/001892
(87) Internationale Veröffentlichungsnummer: WO 1999/014560

(56) Entgegenhaltungen:
- EP-A- 0 313 089
- EP-A- 0 441 523
- EP-A- 0 588 626
- EP-A- 0 708 315
- DE-A- 4 407 209
- U.KONZELMANN ET AL.: "Breakthrough in Reverse Flow Detection - A New Mass Air Flow Meter Using Micro Silicon Technology" SAE-PAPER 950433; ELECTRONIC ENGINE CONTROLS 1995 (SP1082), Seiten 105-110, XP002084070 WARRENDALE PA US in der Anmeldung erwähnt

## Beschreibung

### Stand der Technik

Die Erfindung geht aus von einer Vorrichtung zur Messung der Masse eines strömenden Mediums nach der Gattung des Anspruchs 1. Aus der gattungsbildeneden DE 44 07 209 A1 ist eine Vorrichtung bekannt, die ein temperaturabhängiges Meßelement aufweist, das in einem geradlinig verlaufenden Meßkanal untergebracht ist. Der Meßkanal erstreckt sich in der Vorrichtung von einem Einlaß zu einem Auslaß, an den sich ein eine S-Form aufweisender Umlenkkanal anschließt. Das strömende Medium strömt von außen in den Meßkanal ein und anschließend in den Umlenkkanal, wo es aus einer Auslaßöffnung wieder ausströmt. Der Meßkanal hat einen rechteckförmigen Strömungsquerschnitt, wobei zwei dem plättchenförmigen Meßelement zugewandte Seitenflächen schräg verlaufend ausgebildet sind, so daß sich in Strömungsrichtung des Mediums im Meßkanal eine Verjüngung des Meßkanals ergibt. Eine quer zu den Seitenflächen verlaufende Oberfläche des Meßkanals, aus der das Meßelement herausragt und eine der Oberfläche gegenüberliegende Unterfläche des Meßkanals verlaufen dabei plan bzw. parallel mit gleichbleibendem Abstand zueinander.

Eine mit einem derartigen Meßkanal ausgestattete Vorrichtung ist auch aus dem SAE-Paper 950433 (International Congress and Exposition Detroit, Michigan, February 27 - March 2, 1995, Reprinted from: Electronic Engine Controls 1995 (SP-1082)) bekannt. Wie der Schnittdarstellung auf Seite 108 in Figur 7 oberes Bild entnehmbar ist, wird der Meßkanal und der Umlenkkanal im wesentlichen aus zwei Teilen gebildet; wobei ein im folgenden als Bodenteil bezeichnetes Teil mit dem Meßelement eine Seitenfläche, eine Oberfläche und eine Unterfläche des Meßkanals und des Umlenkkanals enthält. Das andere Teil besitzt nur die zweite Seitenfläche von Meßkanal und Umlenkkanal und bildet somit ein Deckelteil. Der Bodenteil und der Deckelteil sind vorzugsweise aus Kunststoff beispielsweise in Kunststoffspritzgußtechnik hergestellt. Bedingt durch die verjüngende Gestaltung der Seitenflächen des Meßkanals ergibt sich eine zunehmende Wanddicke in Strömungsrichtung. Bei der Herstellung hat sich gezeigt, daß es aufgrund der zunehmenden Wanddicke zu unterschiedlichen Abkühlungsgeschwindigkeiten und Materialanhäufungen kommt, die insbesondere zu Einsenkungen an den Seitenflächen des Meßkanals führen können. Bei einer vorgesehenen Massenherstellung der Vorrichtung hat dies die Folge, daß mehr oder weniger stärke Streuungen der erzielbaren Meßgenauigkeit der Vorrichtungen auftreten.

Ferner ist aus der EP 0 708 315 A2 eine Vorrichtung zur Messung der Masse eines strömenden Mediums mit einem Messelement bekannt, das in einem Messkanal angeordnet ist, dessen Messkanalwände im Bereich des Messelementes parallel zur Strömungsrichtung verlaufen.

### Vorteile der Erfindung

Die erfindungsgemäße Vorrichtung zur Messung der Masse eines strömenden Mediums mit den kennzeichnenden Merkmalen des Anspruchs 1 hat demgegenüber den Vorteil, daß in Massenherstellung Vorrichtungen mit einem fertigungsgerechten Gehäuse so herstellbar sind, daß nur äußerst geringe Streuungen der Meßgenauigkeit auftreten. Besonders vorteilhaft ist außerdem, daß durch die erfindungsgemäße Gestaltung der Wände des Meßkanals weiterhin eine Beschleunigung der Strömung im Meßkanal beibehalten werden kann, die bekanntermaßen zu einer Stabilisierung der Strömung des Mediums im Meßkanal, insbesondere am Einlaß, führt.

Durch die in den Unteransprüchen aufgeführten Maßnahmen sind vorteilhafte Weiterbildungen und Verbesserungen der im Anspruch 1 angegebenen Vorrichtung möglich.

Besonders vorteilhaft ist eine geneigte Ausbildung einer Randfläche des Umlenkkanals, mit der es möglich ist, die Herstellung des Meßkanals und des Umlenkkanals weiter zu vereinfachen, wobei es außerdem zu einer weiteren Verbesserung des Meßergebnisses kommt.

Vorteilhaft ist ferner eine im Umlenkkanal vorgesehene Strömungsverbindung zur Außenströmung in der Ansaugleitung in Form einer Öffnung, mittels der eventuell noch vorhandene Reststörungen einer Druckwelle im Umlenkkanal gänzlich ausgeschaltet werden können, so daß sich eine weitere Verbesserung des Meßergebnisses erzielen läßt. Darüber hinaus weist die Vorrichtung ein deutlich reduziertes Meßsignalrauschen auf, das durch im Meßkanal auftretende Turbulenzen entstehen kann.

### Zeichnung

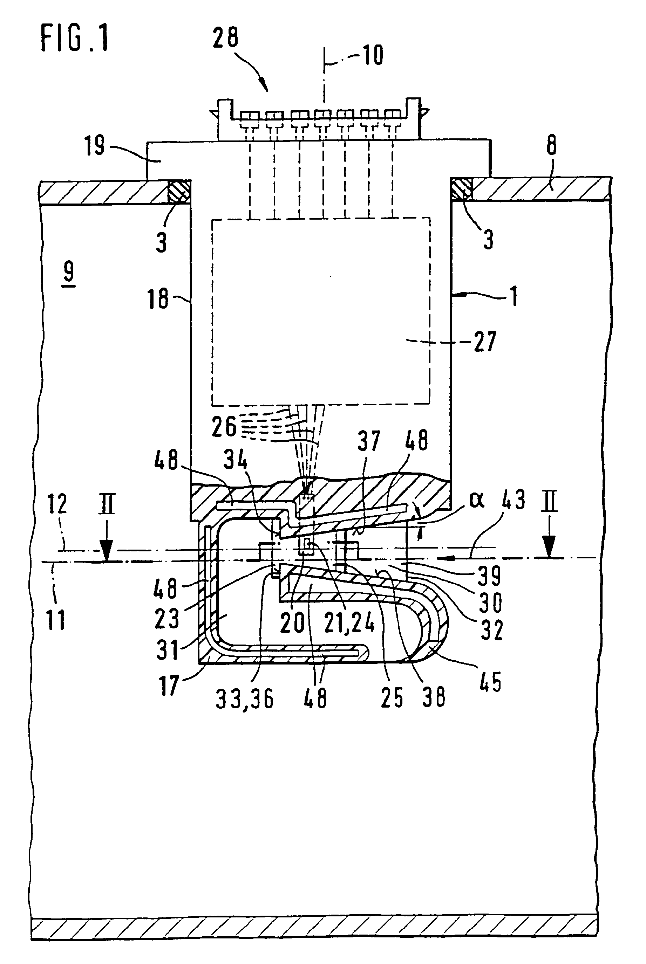

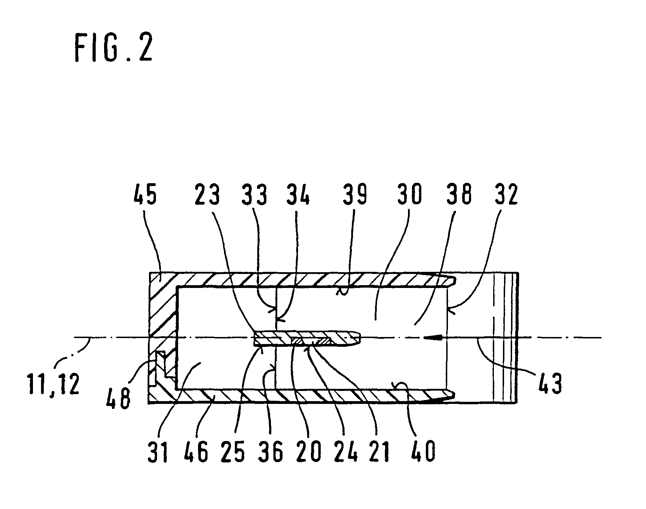

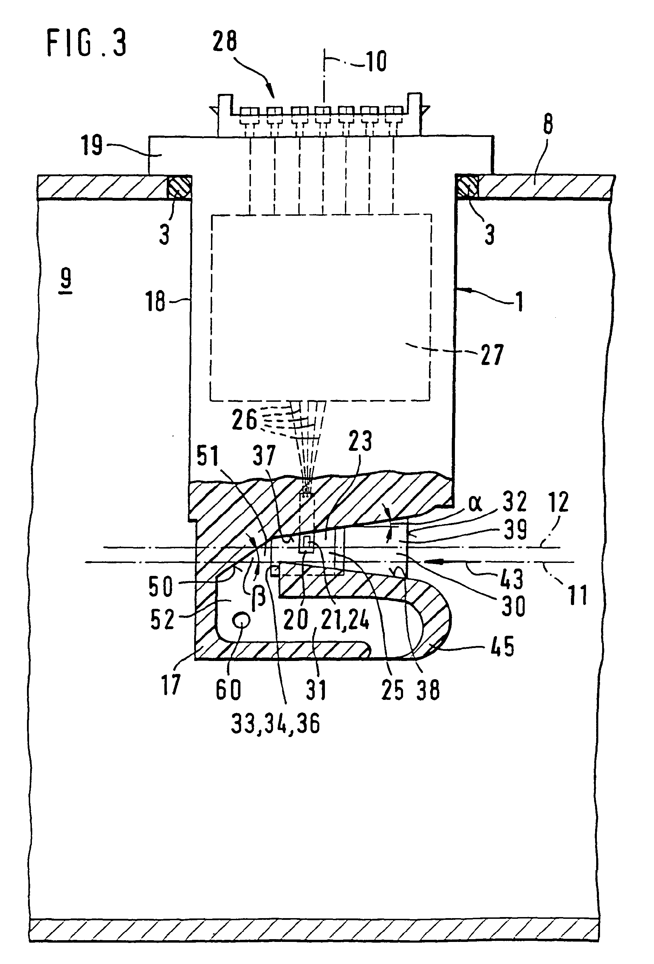

Ausführungsbeispiele der Erfindung sind in der Zeichnung vereinfacht dargestellt und in der nachfolgenden Beschreibung näher erläutert. Es zeigen Figur 1 in teilweiser Schnittdarstellung eine Seitenansicht der Vorrichtung gemäß einem ersten erfindungsgemäßen Ausführungsbeispiel, Figur 2 einen Schnitt durch die Vorrichtung entlang einer Linie II-II in Figur 1, Figur 3 in teilweiser Schnittdarstellung eine Seitenansicht der Vorrichtung gemäß einem zweiten erfindungsgemäßen Ausführungsbeispiel.

### Beschreibung der Ausführungsbeispiele

Die Figur 1 zeigt in teilweiser Schnittdarstellung eine Seitenansicht einer mit 1 gekennzeichneten Vorrichtung, die zur Messung der Masse eines strömenden Mediums, insbesondere der Ansaugluftmasse von Brennkraftmaschinen, dient. Bei der Brennkraftmaschine kann es sich um eine gemischverdichtende, fremdgezündete oder auch um eine luftverdichtende, selbstzündende handeln. Die Vorrichtung 1 hat vorzugsweise eine schlanke, stabförmige, sich in Richtung einer Steckachse 10 länglich erstreckende, quaderförmige Gestalt und ist in eine aus einer Wandung 8 ausgenommenen Öffnung einer Ansaugleitung 9 zum Beispiel steckbar eingeführt. Die Vorrichtung 1 ist mittels eines Dichtringes 3 in der Wandung 8 abgedichtet und beispielsweise mittels einer nicht näher dargestellten Schraubverbindung mit dieser fest verbunden. Die schraffiert dargestellte Wandung 8 ist Teil der beispielsweise zylindrisch ausgebildeten Ansaugleitung 9, durch die hindurch die Brennkraftmaschine über einen nicht näher dargestellten Luftfilter Luft aus der Umgebung ansaugen kann. Die Wandung 8 der Ansaugleitung 9 begrenzt einen Strömungsquerschnitt, der im Fall der zylindrischen Ansaugleitung 9 etwa einen kreisrunden Querschnitt aufweist, in dessen Mitte sich in axialer Richtung, parallel zur Wandung 8 eine Mittelachse 11 erstreckt, die senkrecht zur Steckachse 10 orientiert ist. Die Vorrichtung 1 ragt mit einem im folgenden als Meßteil 17 bezeichneten Teil in das strömende Medium, wobei der Meßteil 17 sich beispielsweise etwa im Bereich der Mitte der Ansaugleitung 9 befindet.

Die Vorrichtung 1 setzt sich zum Beispiel einstückig aus dem Meßteil 17, einem Trägerteil 18 und einem Halteteil 19 zusammen und ist vorzugsweise aus Kunststoff in Kunststoffspritzgußtechnik hergestellt. Ein Meßelement 21 ist beispielsweise in Form eines sogenannten mikromechanischen Bauteils ausgebildet und hat einen plattenförmigen Trägerkörper 20 auf Siliziumbasis, mit einem durch Ausätzen entstandenen membranförmigen Sensorbereich mit einer äußerst geringen Dicke und mehrere, ebenfalls durch Ausätzen entstandene Widerstandsschichten. Diese Widerstandsschichten bilden wenigstens einen temperaturabhängigen Meßwiderstand und beispielsweise einen Heizwiderstand. Vorzugsweise befindet sich in der Mitte der Membran der Heizwiderstand, der mit Hilfe eines Temperaturfühlers auf eine Übertemperatur geregelt wird. Stromauf und stromab des vom Heizwiderstand gebildeten Heizbereichs befinden sich zwei, zum Heizbereich symmetrisch angeordnete Meßwiderstände. Ein derartiges Meßelement ist dem bereits genannten SAE-Paper 950433 wie auch durch die DE-OS 42 19 454 bekannt, wobei die Offenbarung beider Schriften ausdrücklich Bestandteil der hier vorliegenden Patentanmeldung sein soll. Der Trägerkörper 20 des Meßelements 21 ist dabei in eine Aussparung einer
zum Beispiel aus Metall bestehenden plattenförmigen Aufnahme 23 bündig in dieser untergebracht und zum Beispiel durch Klebung gehalten. Die einzelnen Widerstandsschichten des Meßelements 21 sind mittels im Innern der Vorrichtung 1 verlaufenden Anschlußleitungen 26 mit einer in Figuren 1 und 3 gestrichelt dargestellten elektronischen Auswerteschaltung 27 elektrisch verbunden, die beispielsweise eine brückenähnliche Widerstandsmeßschaltung enthält. Mit einer am Halteteil 19 vorgesehenen Steckverbindung 28 können die von der Auswerteschaltung 27 bereitgestellten elektrischen Signale beispielsweise auch einem weiteren elektronischen Steuergerät zur Auswertung zugeführt werden.

Wie in Figuren 1 und 2 dargestellt ist, besitzt der Meßteil 17 der Vorrichtung 1 eine quaderförmige Gestalt und einen Meßkanal 30, der sich entlang einer mittig im Meßkanal 30 verlaufenden Meßkanalachse 12 von einem einen rechteckförmigen Querschnitt aufweisenden Einlaß 32 zu einem ebenfalls einen rechteckförmigen Querschnitt aufweisenden Auslaß 33 erstreckt. Die Vorrichtung 1 ist in der Ansaugleitung 9 vorzugsweise mit der Meßkanalachse 12 parallel zur Mittelachse 11 eingebaut. Es ist aber auch möglich, die Vorrichtung 1 mit schräger Einbaulage gedreht um die Steckachse 10 einzubauen. Denkbar ist auch, zusätzlich zur schrägen Einbaulage oder anstelle der schrägen Einbaulage, die Vorrichtung 1 in gekippter Einbaulage geneigt um die Mittelachse 11 einzubauen. Der Meßkanal 30 geht stromabwärts in einen eine S-Form aufweisenden Umlenkkanal 31 über. Der Meßkanal 30 ist von einer der Mittelachse 11 entfernteren, in den Figuren 1 und 3 oben liegenden Oberfläche 37 und von einer der Mittelachse 11 näheren, in den Figuren 1 und 3 unten liegenden Unterfläche 38 sowie von zwei Seitenflächen 39, 40 begrenzt, wobei in den Figuren 1 und 3 nur die eine der parallel zur Zeichenebene verlaufenden Seitenflächen, nämlich die Seitenfläche 39 sichtbar ist. Die Oberfläche 37 und die Unterfläche 38 verlaufen in Richtung 43 des im Meßkanal 30 strömenden Mediums zum Meßelement 21 hin aufeinander zu und enden mit einem engsten Querschnitt an einer engsten Stelle 36 an dem Auslaß 33 des Meßkanals 30, der zugleich einen Einlaß 34 des Umlenkkanals 31 darstellt. Das Meßelement 21 mit den Widerstandsschichten hat eine der Strömung 43 im Meßkanal 30 ausgesetzte Oberfläche 24, die mit einer Oberfläche 25 der Aufnahme 23 fluchtet. Die in einer Ebene quer bzw. im wesentlichen senkrecht zur Oberfläche 24 des plattenförmigen Meßelements 21 verlaufenden Flächen 37, 38 des Meßkanals 30 schließen dabei einen Neigungswinkel α ein, der vorzugsweise etwa 8° beträgt.

Wie in Figur 2, einer Schnittdarstellung entlang einer Linie II-II in Figur 1, näher dargestellt ist, verlaufen die beiden Seitenflächen 39 und 40 in etwa parallel zur Oberfläche 24 des Meßelements 21. Es ergibt sich somit nur durch die aufeinanderzulaufenden Flächen 37, 38 eine axiale Verjüngung des Meßkanals 30 in Strömungsrichtung 43, wobei das Meßelement 21 vorzugsweise etwas stromaufwärts der engsten Stelle 36 des Meßkanals 30 angeordnet ist. Die in Strömungsrichtung 43 vorgesehene Verjüngung des Meßkanals 30 bzw. stetige Verringerung des Strömungsquerschnittes vom Einlaß 32 zum Auslaß 33 hin hat den Effekt, daß im Bereich des Meßelements 21 sich eine beschleunigte Strömung ergibt, die eine nahezu ungestörte, gleichmäßige Parallelströmung im Bereich des Meßelements 21 bewirkt.

Durch die erfindungsgemäße schräge Ausbildung der senkrecht zur Oberfläche 24 des Meßelements 21 verlaufenden Flächen 37, 38 ergibt sich, wie in Figur 2 dargestellt ist, ein die Seitenfläche 39 und die Flächen 37, 38 aufnehmendes Bodenteil 45 und ein mit dem Bodenteil 45 beispielsweise trennbar verbundenes Deckelteil 46, wobei die Dicke der Wandung des Bodenteils 45 im Bereich der Seitenfläche 39 und des Deckelteils 46 im Bereich der Seitenfläche 40 konstant ist. Bei der vorgesehenen Herstellungsweise des Bodenteils 45 und des Deckelteils 46 durch Kunststoffspritzgießen ergibt sich durch die gleichbleibende Dicke der Wandungen im Bereich der Seitenflächen 39, 40 neben der einfacheren Herstellungsweise beim Spritzgießen der Vorteil, daß sich eine gleichbleibende Abkühlgeschwindigkeit einstellen kann, was die Einhaltung einer genauen Planheit der Flächen 39 und 40 gewährleistet. Wie in Figur 1 dargestellt ist, besitzt der Bodenteil 45 außerdem zum Beispiel mehrere rinnenförmige Vertiefungen 48, die zumindest am Randbereich des Meßteils 17 vorgesehen sind und in welche der Deckelteil 46 mittels Vorsprüngen eingreifen kann, um das Deckelteil 46 am Bodenteil 45 beispielsweise zu verrasten. Durch die Gestaltung der Vertiefungen 48 läßt sich insbesondere im Bereich des verjüngend gestalteten Meßkanals 30 eine gleichbleibende Wandstärke bewerkstelligen, die beim Herstellen zu einer gleichbleibenden Abkühlgeschwindigkeit führt, so daß Einsenkungen oder Verwerfungen an den Flächen 37, 38 des Meßkanals 30 ebenfalls ausgeschlossen werden können.

In der Figur 3 ist ein zweites erfindungsgemäßes Ausführungsbeispiel dargestellt, bei dem alle gleichen oder gleichwirkenden Teile mit denselben Bezugszeichen der Figuren 1 und 2 dargestellt sind. Die in Figur 3 dargestellte Vorrichtung 1 weist einen gegenüber der Figur 1 etwas abgewandelt gestalteten Umlenkkanal 31 auf, dessen senkrecht zur Zeichenebene verlaufende Randfläche 50 eines an den Meßkanal 30 direkt anschließenden ersten Teilstücks 51 des Umlenkkanals 31 schräg zur Meßkanalachse 12 verläuft. Vorzugsweise beträgt dabei ein von der Meßkanalachse 12 und der Randfläche 50 eingeschlossener Neigungswinkel β etwa 45°. Es ist aber auch möglich, die Randfläche 50 mit einem Neigungswinkel β auszubilden, der im Bereich von etwa 30° bis 60° liegt. Die geneigte Randfläche 50 ist vorgesehen, um das vom Auslaß 33 des Meßkanals 30 in das erste Teilstück 51 einströmende Medium entlang der Randfläche 50 in ein zweites Teilstück 52 des Umlenkkanals 31 umzuleiten, ohne daß eine abrupte Strömungsvergrößerung an einer Stufe vorliegt, wie dies bei der Vorrichtung 1 gemäß Figuren 1 und 2 der Fall ist.

Die geneigte Ausbildung der Randfläche 50 bewirkt neben einer einfacher herzustellenden Kanalkontur vorteilhafterweise auch, daß vom Auslaß 33 des Meßkanals 30 ausgehende Störungen in der Strömung, die zum Beispiel in Form von Wirbeln oder in Form von Druckwellen auftreten können, an der Randfläche 50 reflektiert werden. Durch diese zeit- und ortsabhängige Reflexion der Störungen an der Randfläche 50 kann eine Beeinflussung des vom Meßelement 21 abgegebenen elektrischen Signals aufgrund von Störungen in der Strömung nahezu vollständig ausgeschlossen werden, so daß sich ein präzises Meßergebnis des Meßelements 21 einstellt. Außerdem kann noch stromabwärts der Randfläche 50 eine Öffnung 60 im Umlenkkanal 31 vorgesehen sein, die beispielsweise in Form einer Bohrung im Bodenteil 45 eine Verbindung der Strömung im Umlenkkanal 31 zur Außenströmung in der Ansaugleitung 9 herstellt. Denkbar ist auch, diese Öffnung 60 nur im Deckelteil 46 vorzusehen. Selbstverständlich können auch mehrere Öffnungen 60 zum Beispiel im Bodenteil 45 und/oder im Deckelteil 46 vorhanden sein. Durch die zumindest eine Öffnung 60 kann der vom Umlenkkanal 31 gebildete Resonanzraum für die stromab des Auslasses 33 des Meßkanals 30 abgehenden Druckwellen derart beeinflußt werden, daß es durch einen Druckausgleich zu einer Abschwächung der an der Randfläche 50 reflektierten Druckwellen kommt. Es läßt sich dabei durch die Größe des Querschnitts der zumindest einen Öffnung 60 die Eigenfrequenz des Resonanzraums auf die Frequenz der abgehenden Druckwellen in der Weise abstimmen, daß es zu einer weiteren Verbesserung des vom Meßelement 21 abgegebenen Meßwertes kommt.

## Patentansprüche

1. Vorrichtung zur Messung der Masse eines strömenden Mediums, insbesondere der Ansaugluft von Brennkraftmaschinen, mit einem vom strömenden Medium umströmten, temperaturabhängigen Messelement (21), das in einem in der Vorrichtung (1) verlaufenden Messkanal (30) angeordnet ist, der sich von einem Einlass (32) zu einem Auslass (33) erstreckt, an den sich ein Umlenkkanal (31) anschließt, wobei der Messkanal (30) zwei in Richtung der Strömung im Messkanal aufeinander zulaufende Flächen (37; 38) hat, **dadurch gekennzeichnet, dass** die in Strömungsrichtung (43) des Mediums im Messkanal (30) aufeinander zulaufenden zwei Flächen (37; 38) des Messkanals (30) quer zu einer Oberfläche (24), die von einem in eine Aufnahme (23) bündig eingesetzten Messelement (21) aufgespannt wird und der Strömung im Messkanal ausgesetzt ist, liegen und in Bezug auf die Strömungsrichtung (43) des Mediums geneigt ausgebildet sind.

2. Vorrichtung nach Anspruch 1, **dadurch gekennzeichnet, daß** der Strömungsquerschnitt des Meßkanals (30) rechteckförmig ist und zwei zur Oberfläche (24) des Meßelements (21) parallel verlaufende Flächen (39, 40) aufweist.

3. Vorrichtung nach Anspruch 1 oder 2, **dadurch gekennzeichnet, daß** jeweils ein von den aufeinanderzulaufenden Flächen (37; 38) und einer mittig durch den Meßkanal (30) hindurchgehenden Achse (12) eingeschlossener Neigungswinkel α etwa 8° beträgt.

4. Vorrichtung nach Anspruch 1, **dadurch gekennzeichnet, daß** der Meßkanal (30) und der Umlenkkanal (31) aus zwei zusammensetzbaren Teilen, einem Bodenteil (45) und einem Deckelteil (46), gebildet wird.

5. Vorrichtung nach Anspruch 1, **dadurch gekennzeichnet, daß** eine Randfläche (50) eines ersten Teilstücks (51) des Umlenkkanals (31) zu einer mittig durch den Meßkanal (30) hindurchgehenden Achse (12) geneigt ausgebildet ist.

6. Vorrichtung nach Anspruch 5, **dadurch gekennzeichnet, daß** ein von der Randfläche (50) und der Achse (12) des Meßkanals (30) eingeschlossener Neigungswinkel β im Bereich von etwa 30° bis 60° liegt.

7. Vorrichtung nach Anspruch 1, **dadurch gekennzeichnet, daß** im Umlenkkanal (31) zumindest eine Öffnung (60) vorgesehen ist, die eine Verbindung zu dem die Vorrichtung (1) umströmenden Medium herstellt.

8. Vorrichtung nach Anspruch 4, **dadurch gekennzeichnet, daß** die Dicke der Wandung von Bodenteil (45) und Deckelteil (46) im Bereich von Seitenfläche (39, 40), die parallel zur Oberfläche (24) des Meßelements (21) verlaufen, konstant ist.

9. Vorrichtung nach Anspruch 4, **dadurch gekennzeichnet, daß** im Bodenteil (45) zumindest im Bereich des Meßkanals (30) Vertiefungen (48) vorgesehen sind, die eine konstante Wandstärke der Flächen (37, 38) des Meßkanals (30) bewirken.

## Claims

1. Device for measuring the mass of a flowing medium, in particular of the intake air of internal combustion engines, with a temperature-dependent measuring element (21) around which the flowing medium flows and which is arranged in a measuring duct (30) which runs in the device (1) and extends from an inlet (32) to an outlet (33) and which is followed by a deflecting duct (31), the measuring duct (30) having two faces (37, 38) running towards one another in the direction of flow in the measuring duct, **characterized in that** the two faces (37, 38) of the measuring duct (30) which run towards one another in the direction of flow (43) of the medium in the measuring duct (30) lie transversely with respect to a surface (24), which is spanned by a measuring element (21) inserted, flush, into a receptacle (23) and is exposed to the flow in the measuring duct, and are designed to be inclined with respect to the direction of flow (43) of the medium.

2. Device according to Claim 1, **characterized in that** the flow cross section of the measuring duct (30) is rectangular and has two faces (39, 40) running parallel with respect to the surface (24) of the measuring element (21).

3. Device according to Claim 1 or 2, **characterized in that** in each case an angle of inclination α formed by the faces (37, 38) running towards one another and by an axis (12) passing centrally through the measuring duct (30) amounts to about 8°.

4. Device according to Claim 1, **characterized in that** the measuring duct (30) and the deflecting duct (31) are formed from two assemblable parts, a bottom part (45) and a cover part (46).

5. Device according to Claim 1, **characterized in that** a marginal face (50) of a first portion (51) of the deflecting duct (31) is designed to be inclined with respect to an axis (12) passing centrally through the measuring duct (30).

6. Device according to Claim 5, **characterized in that** an angle of inclination β formed by the marginal face (50) and the axis (12) of the measuring duct (30) lies in the range of about 30° to 60°.

7. Device according to Claim 1, **characterized in that** at least one orifice (60) which makes a connection with the medium flowing around the device (1) is provided in the deflecting duct (31).

8. Device according to Claim 4, **characterized in that** the thickness of the wall of the bottom part (45) and cover part (46) is constant in the region of side faces (39, 40) which run parallel with respect to the surface (24) of the measuring element (21).

9. Device according to Claim 4, **characterized in that** in the bottom part (45), at least in the region of the measuring duct (30), depressions (48) are provided which cause a constant wall thickness of the faces (37, 38) of the measuring duct (30).

## Revendications

1. Dispositif de mesure de la masse d'un fluide en écoulement, notamment de l'air d'admission de moteurs à combustion interne, comprenant un élément de mesure (21) dépendant de la température, entouré par la circulation d'un fluide en écoulement, qui est disposé dans un canal de mesure (30) s'étendant dans le dispositif (1), qui s'étend depuis une entrée (32) jusqu'à une sortie (33), à laquelle se raccorde un canal de déviation (31), le canal de mesure (30) ayant deux faces (37 ; 38) convergeant l'une vers l'autre dans la direction de l'écoulement dans le canal de mesure, **caractérisé en ce que** les deux faces (37 ; 38) du canal de mesure (30) convergeant l'une vers l'autre dans la direction de l'écoulement (43) du fluide dans le canal de mesure (30) se situent transversalement à une surface (24) qui est formée par un élément de mesure (21) inséré en affleurement dans un évidement (23) et qui est soumis à l'écoulement dans le canal de mesure, et sont réalisées de manière inclinée par rapport à la direction d'écoulement (43) du fluide.

2. Dispositif selon la revendication 1, **caractérisé en ce que** la section transversale d'écoulement du canal de mesure (30) est rectangulaire et présente deux faces (39, 40) s'étendant parallèlement à la surface (24) de l'élément de mesure (21).

3. Dispositif selon la revendication 1 ou 2, **caractérisé en ce qu'**à chaque fois un angle d'inclinaison α formé par les faces (37 ; 38) convergeant l'une vers l'autre et un axe (12) traversant centralement le canal de mesure (30) vaut environ 8°.

4. Dispositif selon la revendication 1, **caractérisé en ce que** le canal de mesure (30) et le canal de déviation (31) sont formés par deux pièces pouvant être assemblées, une partie de fond (45) et une partie de couvercle (46).

5. Dispositif selon la revendication 1, **caractérisé en ce qu'**une face de bord (50) d'une première pièce partielle (51) du canal de déviation (31) est réalisée sous forme inclinée par rapport à un axe (12) traversant centralement le canal de mesure (30).

6. Dispositif selon la revendication 5, **caractérisé en ce qu'**un angle d'inclinaison β formé par la face de bord (50) et l'axe (12) du canal de mesure (30) est compris dans la plage d'environ 30° à 60°.

7. Dispositif selon la revendication 1, **caractérisé en ce qu'**au moins une ouverture (60) est prévue dans le canal de déviation (31), laquelle constitue une connexion avec le fluide circulant autour du dispositif (1).

8. Dispositif selon la revendication 4, **caractérisé en ce que** l'épaisseur de la paroi de la partie de fond (45) et de la partie de couvercle (46) est constante dans la région de faces latérales (39, 40) qui s'étendent parallèlement à la surface (24) de l'élément de mesure (21).

9. Dispositif selon la revendication 4, **caractérisé en ce que** l'on prévoit dans la partie de fond (45) au moins dans la région du canal de mesure (30) des renfoncements (48) qui assurent une épaisseur de paroi constante des faces (37, 38) du canal de mesure (30).
